# EUROPEAN PATENT APPLICATION

(11) **EP 4 787 515 A1**
(43) Date of publication of application: **05.08.2026**
(21) Application number: 25867155.1
(22) Date of filing: 18.06.2025
(51) Int. Cl.: H01M 10/04, H01M 10/48, H01M 50/10, H01M 50/30, H01M 50/531, H01M 50/538, H01M 50/60, G01R 31/36, G01R 31/364, G01R 31/385

(54) **BATTERY CELL GRIPPER AND JIG DEVICE COMPRISING SAME**

(30) Priority: 18.12.2024 KR 20240189388
(71) Applicant: LG Energy Solution, Ltd., Seoul 07335 (KR)
(72) Inventor: LEE, Juho, Daejeon 34122 (KR); PARK, Sungrock, Daejeon 34122 (KR); SHIM, Kyuhun, Daejeon 34122 (KR); KIM, Taeheon, Daejeon 34122 (KR)
(74) Representative: Goddar, Heinz J.
(86) International application number: PCT/KR2025/008401
(87) International publication number: WO 2026/134478

(57) **Abstract**

The present disclosure relates to a battery cell gripper gripping a cylindrical battery cell and a jig device including the same, and the battery cell gripper according to an embodiment of the present disclosure includes a holder clamping a side surface of the cylindrical battery cell and a first direction transfer unit moving the holder in a first direction to connect bottom surfaces of both sides of the cylindrical battery cell (Representative figure: 2)

## Description

### [TECHNICAL FIELD]

The present disclosure relates to a battery cell gripper for clamping a cylindrical battery cell when welding an electrode assembly and a current collecting plate included in the cylindrical battery cell, and a jig device including the same.

### [BACKGROUND ART]

Secondary batteries, which have high applicability according to product groups and electrical characteristics, such as high energy density, have been universally applied not only to portable devices but also to electric vehicles (EVs) or hybrid electric vehicles (HEVs) driven by electric power sources.

These secondary batteries have the primary advantage of being able to drastically reduce the use of fossil fuels and also have the advantage of not generating any byproducts from the use of energy, and have thus come to prominence as a new energy source for improving environmental friendliness and energy efficiency.

The types of secondary batteries that are currently widely used include lithium ion batteries, lithium polymer batteries, nickel cadmium batteries, nickel hydrogen batteries, nickel zinc batteries, etc. An operating voltage of these unit secondary battery cells, i.e., unit battery cells, is approximately 2.5 V to 4.5 V. Therefore, when a higher output voltage is required, a plurality of battery cells may be connected in series to configure a battery pack. In addition, a battery pack may also be configured by connecting a plurality of battery cells in parallel depending on the charge/discharge capacity required for the battery pack. Therefore, the number of battery cells included in the battery pack and the electrical connection type may be set variably depending on a required output voltage or charge/discharge capacity.

Meanwhile, as the types of unit secondary battery cells, cylindrical, prismatic, and pouch-shaped battery cells are known. In the case of a cylindrical battery cell, a separator, which is an insulator, is interposed between positive and negative electrodes, which are wound to form a jelly-roll-shaped electrode assembly, which is then inserted into a battery case to configure a battery. In addition, a current collecting plate may be connected to an uncoated portion of each of the positive and negative electrodes and may electrically connect the electrode assembly to an electrode terminal exposed to the outside. For reference, a positive terminal may be a cap plate of a sealing body that seals an opening of a battery case, and a negative terminal may be a battery case. However, according to the related art cylindrical battery cell having such a structure, since current is concentrated on a strip-shaped electrode tab connected to a positive electrode uncoated portion or a negative electrode uncoated portion, the resistance is high, a lot of heat is generated, and the current collection efficiency is poor.

In general, resistance and heat generation are not major issues for small cylindrical battery cells, but if a form factor is increased to apply cylindrical battery cells to electric vehicles, a problem may arise in which cylindrical battery cells may be ignited due to a lot of heat generated around electrode tabs during a rapid charging process.

In order to solve this problem, a cylindrical battery cell having a structure in which a positive electrode uncoated portion and a negative electrode uncoated portion are respectively located at the top and bottom of the jelly roll-type electrode assembly and a current collecting plate is welded to these uncoated portions to improve the current collecting efficiency has been developed.

In this structure, welding of the foil-shaped uncoated portions and the current collecting plate is essential. However, since the shapes of the current collecting plate welded on the positive electrode side and the current collecting plate welded on the negative electrode side are different, a welding process suitable for the shapes is required, and if the cylindrical battery cell moves during welding, deviations may occur in a welding angle and welding position.

### [DETAILED DESCRIPTION OF INVENTION]

### [TECHNICAL PROBLEMS]

Therefore, the present disclosure provides a battery cell gripper for stable clamping of a cylindrical battery cell when welding an electrode assembly and a current collecting plate.

In addition, the present disclosure provides a jig device including the battery cell gripper described above.

However, the technical problem to be solved by the present disclosure is not limited to the above-described problem, and other problems not mentioned may be clearly understood by those skilled in the art from the description of the disclosure given below.

### [TECHNICAL SOLUTION]

According to an embodiment of the present disclosure, a battery cell gripper gripping a cylindrical battery cell includes a holder clamping a side surface of the cylindrical battery cell and a first direction transfer unit configured to move the holder in a first direction connecting bottom surfaces of both sides of the cylindrical battery cell.

The first direction transfer unit may include one of a linear motor or a ball screw motor.

The holder may include at least a pair of gripping fingers facing each other with the cylindrical battery cell interposed therebetween.

In addition, a curved gripping recess may be formed in a region in which the pair of gripping fingers are in contact with the cylindrical battery cell.

The gripping recess may be formed in a shape corresponding to a curved surface of the side surface of the cylindrical battery cell.

In addition, the battery cell gripper may further include a second direction transfer unit adjusting a gap between the pair of gripping fingers.

The second direction transfer unit may include one of a linear motor or a ball screw motor.

In addition, the holder may include a pair of first gripping fingers facing each other with the cylindrical battery cell therebetween and a pair of second gripping fingers spaced apart from the pair of first gripping fingers in the first direction and facing each other with the cylindrical battery cell therebetween.

In addition, according to an embodiment of the present disclosure, a jig device for clamping a cylindrical battery cell during welding of an electrode assembly and a current collecting plate includes a base, a battery cell gripper provided on the base and clamping a side surface of the cylindrical battery cell, and one or more welding masks provided on the base and contacting a bottom surface of at least one side of the cylindrical battery cell, wherein the battery cell gripper includes a holder for clamping a side surface of a cylindrical battery cell and a first direction transfer unit configured to move the holder in a first direction so that the bottom surface of at least one side of the cylindrical battery cell may be in close contact with the one or more welding masks.

The first direction transfer unit of the battery cell gripper may include one of a linear motor or a ball screw motor.

The holder of the battery cell gripper may include at least a pair of gripping fingers facing each other with the cylindrical battery cell therebetween.

A curved gripping recess may be formed in a region in which the pair of gripping fingers are in contact with the cylindrical battery cell.

The gripping recess may be formed in a shape corresponding to a curved surface of the side surface of the cylindrical battery cell.

In the jig device, the battery cell gripper further may include a second direction transfer unit adjusting a gap between the pair of gripping fingers.

The second direction transfer unit of the battery cell gripper may include one of a linear motor or a ball screw motor.

The holder of the battery cell gripper may include a pair of first gripping fingers facing each other with the cylindrical battery cell therebetween and a pair of second gripping fingers spaced apart from the pair of first gripping fingers in the first direction and facing each other with the cylindrical battery cell therebetween.

### [EFFECT OF INVENTION]

According to the present disclosure, the cylindrical battery cell may be stably clamped when welding the electrode assembly and the current collecting plate.

However, the effects that may be obtained through the present disclosure are not limited to the effects described above, and other technical effects that are not mentioned may be clearly understood by those skilled in the art from the description of the disclosure given below.

### [BRIEF DESCRIPTION OF THE DRAWING]

FIG. 1 shows an exemplary form of a cylindrical battery cell gripped by a battery cell gripper and a jig device including the same according to an embodiment of the present disclosure.
FIG. 2 is a diagram illustrating a battery cell gripper and a jig device including the same according to an embodiment of the present disclosure.
FIGS. 3 and 4 are diagrams illustrating an operating state of the battery cell gripper of FIG. 1.

### [BEST MODE FOR CARRYING OUT THE INVENTION]

The advantages and features of the present disclosure and the methods for achieving them will become apparent by referring to the embodiments described in detail below together with the accompanying drawings. However, the present disclosure is not limited to the embodiments disclosed below but may be implemented in various different forms, and these embodiments are provided only to make the disclosure of the present disclosure complete and to fully inform those skilled in the art of the scope of the invention, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness of layers, films, panels, regions, etc., are exaggerated for clarity. The various figures are thus not to scale. Like reference numerals designate like elements throughout the specification. It will be understood that when an element, such as a layer, film, region, or substrate, is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate, is referred to as being "below" another element, it may be directly below the other element or intervening elements may also be present. In contrast, when an element is referred to as being "directly under" another element, there are no intervening elements present.

Throughout the specification, unless otherwise specifically stated, each element may be singular or plural.

A battery cell gripper 501 and a jig device 101 including the same according to an embodiment of the present disclosure, are intended to stably clamp a cylindrical battery cell 100 when welding an electrode assembly 10 and a current collecting plate 40.

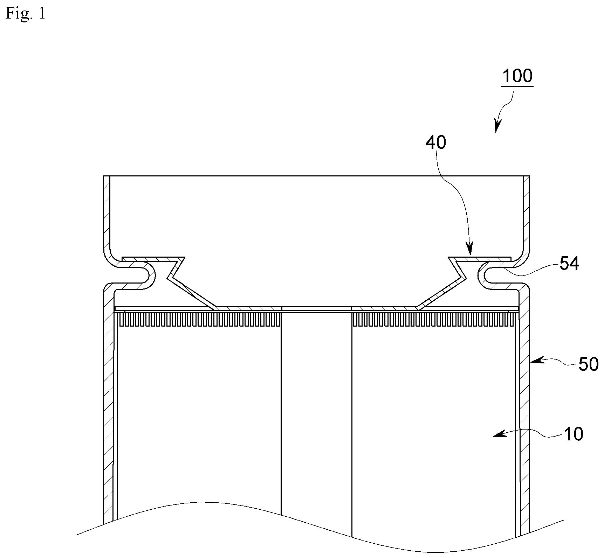

Before describing the battery cell gripper 501 and the jig device 101 including the same according to an embodiment of the present disclosure, an exemplary form of a cylindrical battery cell 100 that the battery cell gripper 501 and the jig device 101 including the same according to an embodiment of the present disclosure grip when welding using a laser will be described with reference to FIG. 1.

The cylindrical battery cell 100 illustrated in FIG. 1 represents an unfinished state during a manufacturing process. As illustrated in FIG. 1, the cylindrical battery cell 100 may include an electrode assembly 10, a battery case 50, and a current collecting plate 40.

The electrode assembly 10 may be a jelly roll type electrode assembly having a winding center hole formed in the center.

The battery case 50 may be configured to receive the electrode assembly 10 through an opening formed at one end. In addition, the battery case 50 may include a beading portion 54 formed to be depressed in an inward direction near one open end portion.

The beading portion 54 may be formed by press-fitting the outer circumference of the battery case 50 and is formed so that the electrode assembly 10, which may have a size corresponding to the width of the battery case 50, does not escape through the opening formed at one end of the battery case 50.

The current collecting plate 40 may include a negative electrode current collecting plate connected to a negative electrode uncoated portion provided in a negative electrode of the electrode assembly 10 and a positive electrode current collecting plate connected to a positive electrode uncoated portion provided in a positive electrode of the electrode assembly.

Meanwhile, the current collecting plate 40 illustrated as an example in FIG. 1 is a negative electrode current collecting plate. The current collecting plate 40 may be coupled to the end portion adjacent to the open portion of the electrode assembly 10. Also, the current collecting plate 40 may be electrically connected to the battery case 50. Here, the current collecting plate 40 may be coupled to the beading portion 54 of the battery case 50 by laser welding.

In this manner, the electric case 50 connected to the current collecting plate 40 functions as a negative terminal. That is, the battery case 50 may have the same polarity as that of the negative electrode of the electrode assembly 10. To this end, the battery case 50 may be formed of a material having conductivity, such as metal. The material of the battery case 50 may be formed of a conductive metal, such as aluminum, steel, stainless steel, etc., but is not limited thereto.

Meanwhile, the positive electrode collecting plate, which is not shown in FIG. 1, may be connected to the positive electrode uncoated portion provided on the positive electrode of the electrode assembly 10 at the opposite side of the cylindrical battery cell 100, i.e., at the bottom of the electrode assembly 10.

The cylindrical battery cell 100 gripped by the battery cell gripper 501 and the jig device 101 including the same according to an embodiment of the present disclosure during the welding process has been described, but the cylindrical battery cell 100 gripped by the battery cell gripper 501 and the jig device 101 including the same according to an embodiment of the present disclosure are not necessarily limited to the cylindrical battery cell 100 having the structure described above.

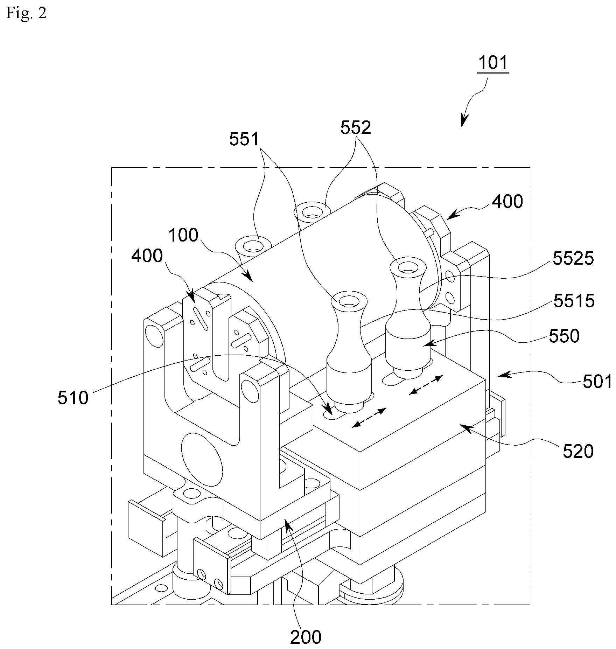

Hereinafter, the battery cell gripper 501 and the jig device 101 including the same according to an embodiment of the present disclosure will be described with reference to FIGS. 2 to 4.

Referring to FIG. 2, the jig device 101 includes a base 200, the battery cell gripper 501 according to an embodiment of the present disclosure, and a welding mask 400.

The base 200 may support the battery cell gripper 501 to be described below and the welding mask 400 to be described below. For example, a guide rail may be formed on the base 200 to assist the movement of a second direction transfer unit 520 of the battery cell gripper 501 to be described below. That is, the second direction transfer unit 520 may move in a second direction along the guide rail formed on the base 200. Here, the guide rail may be formed in various shapes and structures known to those skilled in the art to which the present disclosure pertains.

The welding mask 400 is provided on the base 200 so as to contact at least one bottom surface of the cylindrical battery cell 100. When the welding process is performed on both bottom surfaces of the cylindrical battery cell 100, the welding mask 40 may be provided on each bottom surface of the cylindrical battery cell 100. Then, the welding mask 400 is pressed against one bottom surface of the cylindrical battery cell 100 by the battery cell gripper 501 described below, and thus, the welding mask 400 presses the current collecting plate 40 against a welding area of the electrode assembly 10.

In this manner, the electrode assembly 10 and the current collecting plate 40 of the cylindrical battery cell 100 are fixed using the welding mask 40 and the battery cell gripper 501 described below, so that the transport is performed without a separate loading and unloading procedure for welding, and on-the-fly welding may be performed rapidly and accurately in a scanning manner using a laser welder.

For example, the welding mask 400 may include a long hole. Also, a laser irradiated from the laser welder may move in a scanning manner in a length direction of the long hole of the welding mask 400, thereby performing welding. This laser welding may be performed by partially melting the welding area of the current collecting plate 40 or by interposing solder for welding between the current collecting plate 40 and the beading portion 54 of the battery case 50.

The battery cell gripper 501 is provided on the base 200 and clamps a side surface of the cylindrical battery cell 100.

Specifically, the battery cell gripper 501 includes a holder 550 and a first direction transfer unit 510. In addition, the battery cell gripper 501 may also include a second direction transfer unit 520.

The holder 550 clamps the side surface of the cylindrical battery cell 100. Specifically, the holder 550 may include at least one pair of gripping fingers 551 and 552 facing each other with the cylindrical battery cell 100 therebetween.

Also, curved gripping recesses 5515 and 5525 may be formed in a region in which at least a pair of gripping fingers 551 and 552 are in contact with the cylindrical battery cell 100. At this time, the gripping recesses 5515 and 5525 may be formed in a shape corresponding to a curved surface of a side surface of the cylindrical battery cell 100. For example, the gripping recesses 5515 and 5525 may be formed in a recess shape having a radius of curvature equal to or slightly smaller than a radius of curvature of a curved surface of a side surface of the cylindrical battery cell 100. Here, the radius of curvature of the gripping recesses 5515 and 5525 is formed to be slightly smaller so that the gripping fingers 551 and 552 may tightly grip the cylindrical battery cell 100.

Accordingly, the cylindrical battery cell 100 may be clamped by at least one pair of gripping fingers 551 and 552 while a portion of the side surface of the cylindrical battery cell 100 is accommodated in the gripping recesses 5515 and 5525 of the gripping fingers 551 and 552. That is, at least one pair of gripping fingers 551 and 552 may grip the cylindrical battery cell 100 having a curved surface more stably, thereby effectively preventing the cylindrical battery cell 100 from moving during welding.

In addition, in an embodiment of the present disclosure, the gripping fingers 551 and 552 may be replaced with other types of gripping fingers 551 and 552 depending on the size of the cylindrical battery cell 100. For example, if the type of cylindrical battery cell 100 that the jig device 101 is to grip is changed, the gripping fingers 551 and 552 may be replaced with another type of gripping fingers 551 and 552 with the gripping recesses 5515 and 5525 having a radius of curvature equal to the radius of curvature of a curved side surface of the changed cylindrical battery cell 100.

In addition, the holder 550 may include a pair of first gripping fingers 551 facing each other with the cylindrical battery cell 100 interposed therebetween and a pair of second gripping fingers 552 spaced apart in the first direction from the pair of first gripping fingers 551 and facing each other with the cylindrical battery cell interposed therebetween. Accordingly, the holder 550 may support the side surface of the cylindrical battery cell 100 at four locations.

As described above, since the holder 550 supports the side surface of the cylindrical battery cell 100 at four points with the pair of first gripping fingers 551 and the pair of second gripping fingers 552 with the gripping recesses 5515 and 5525 formed therein, the cylindrical battery cell 100 may be prevented from moving while being clamped to the holder 550, and deviations in a welding angle and welding position of the cylindrical battery cell 100 during welding may be suppressed as much as possible.

The first direction transfer unit 510 is configured to move the holder 550 in the first direction to connect the bottom surfaces of both sides of the cylindrical battery cell 100. In FIG. 2, the arrows indicate the first direction. That is, the first direction transfer unit 510 transfers the holder 550 in the first direction so that at least one bottom surface of the cylindrical battery cell 100 is in close contact with one or more welding masks 400.

For example, in a case in which both bottom surfaces of the cylindrical battery cell 100 are welded, two welding masks 400 may be arranged to contact both bottom surfaces of the cylindrical battery cell 100, respectively. In addition, the first direction transfer unit 510 may transfer the holder 550 gripping the cylindrical battery cell 100 in the direction toward the welding mask 400 that contacts the bottom surface of the cylindrical battery cell 100 in which welding is performed. That is, the first direction transfer unit 510 may transfer the holder 550 so that the bottom surface of the cylindrical battery cell 100 is in close contact with the welding mask 400, thereby pressing the welding mask 400 against the cylindrical battery cell 100.

For example, the first direction transfer unit 510 of the battery cell gripper 501 may include one of a linear motor or a ball screw motor. However, the embodiment of the present disclosure is not limited thereto, and the first direction transfer unit 510 may be formed of various devices known to those skilled in the art to which the present disclosure pertains, as long as it is configured to cause the holder 550 to reciprocate linearly in the first direction.

According to the configuration described above, in an embodiment of the present disclosure, the jig device 101 may bring the bottom surface of one side of the cylindrical battery cell 100 into close contact with the welding mask 400 through the first direction transfer unit 510 included in the battery cell gripper 501 without the need for providing a separate pressure device for pressing the welding mask 400 to the bottom surface of the cylindrical battery cell 100.

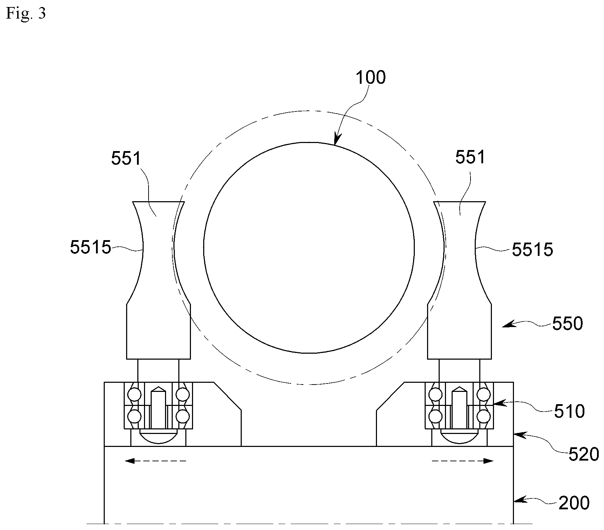

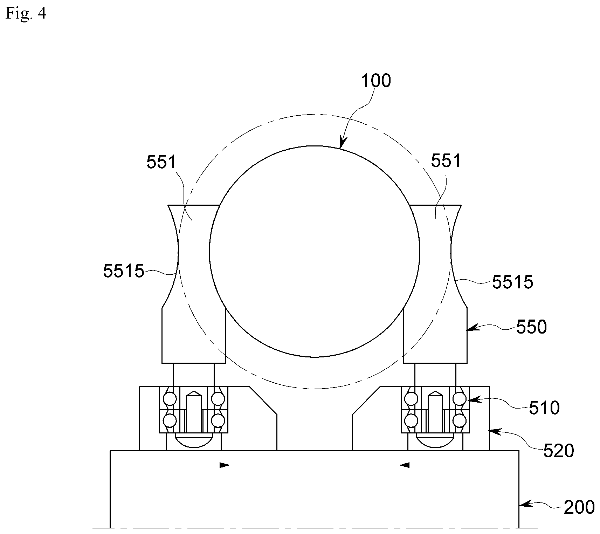

The second direction transfer unit 520 may adjust a gap between at least one pair of gripping fingers 551 and 552 with the cylindrical battery cell 100 interposed therebetween. For example, as illustrated in FIG. 3, when at least one pair of gripping fingers 551 and 552 release the clamping on the cylindrical battery cell 100 after the welding process is completed, the second direction transfer unit 520 may widen the gap between at least one pair of gripping fingers 551 and 552. Also, as illustrated in FIG. 4, the second direction transfer unit 520 may transfer at least one pair of gripping fingers 551 and 552 in the second direction to grip the cylindrical battery cell 100 to be welded again. In FIGS. 3 and 4, the arrows indicate the second direction.

As an example, the second direction transfer unit 520 of the battery cell gripper 501 may include one of a linear motor or a ball screw motor. However, the embodiment of the present disclosure is not limited thereto, and the second direction transfer unit 520 may be formed of various devices known to those skilled in the art to which the present disclosure pertains, as long as it is configured to adjust the gap between at least one pair of gripping fingers 551 and 552 by reciprocating the gripping fingers 551 and 552 linearly in the second direction.

In addition, as described above, a guide rail (not shown) may be formed on the base 200 to assist the movement of the second direction transfer unit 520, and the second direction transfer unit 520 may move in the second direction along the guide rail formed on the base 200.

By such a configuration, according to an embodiment of the present disclosure, the cylindrical battery cell 100 may be stably clamped when welding the electrode assembly 10 and the current collecting plate 40.

Specifically, the cylindrical battery cell 100 may be clamped by at least one pair of gripping fingers 551 and 552 while a portion of the side surface of the cylindrical battery cell 100 is accommodated in the gripping recesses 5515 and 5525 of the gripping fingers 551 and 552. That is, at least one pair of gripping fingers 551 and 552 may grip the cylindrical battery cell 100 having a curved surface more stably, thereby effectively preventing the cylindrical battery cell 100 from moving during welding.

In addition, since the holder 550 of the battery cell gripper 501 supports the side surface of the cylindrical battery cell 100 at four points with the pair of first gripping fingers 551 and the pair of second gripping fingers 552 respectively having the gripping recesses 5515 and 5525 formed therein, the cylindrical battery cell 100 may be prevented from moving while being clamped to the holder 550, and deviations in the welding angle and welding position of the cylindrical battery cell 100 during welding may be suppressed as much as possible.

In addition, the jig device 101 may bring the bottom surface of the cylindrical battery cell 100 into close contact with the welding mask 400 through the first direction transfer unit 510 included in the battery cell gripper 501 without the need for a separate pressing device for pressing the welding mask to the bottom surface of the cylindrical battery cell 100.

Although the operations are illustrated in a specific order in the drawings, it should not be understood that the operations should be performed in the specific order illustrated or in a sequential order or that all illustrated operations should be performed to obtain the desired result.

The descriptions above are merely an example of the technical idea of the present embodiment, and those skilled in the art to which the present embodiment pertains may make various modifications and variations without departing from the essential characteristics of the present embodiment. Therefore, the present embodiments are not intended to limit the technical idea of the present embodiment, but rather to explain the technical idea, and the scope of the technical idea of the present embodiment is not limited by these embodiments. The scope of the present embodiment should be interpreted by the claims below, and all technical ideas within the equivalent scope should be interpreted as being included in the scope of the present embodiment.

### [DESCRIPTION OF REFERENCE NUMERALS]

10: electrode assembly
40: current collecting plate
50: battery case
54: beading portion
100: cylindrical battery cell
101: jig device
200: base
400: welding mask
501: battery cell gripper
510: first direction transfer unit
520: second direction transfer unit
550: holder
551: first gripping finger
552: second gripping finger
5515, 5525: gripping recess

### [INDUSTRIAL APPLICABILITY]

The present disclosure may be used to provide a battery cell gripper for stable clamping of a cylindrical battery cell during welding of an electrode assembly and a current collecting plate.

## Claims

1. A battery cell gripper gripping a cylindrical battery cell, the battery cell gripper comprising:
a holder clamping a side surface of the cylindrical battery cell; and
a first direction transfer unit configured to move the holder in a first direction connecting bottom surfaces of both sides of the cylindrical battery cell.

2. The battery cell gripper of claim 1, wherein the first direction transfer unit includes one of a linear motor or a ball screw motor.

3. The battery cell gripper of claim 1, wherein the holder includes at least a pair of gripping fingers facing each other with the cylindrical battery cell interposed therebetween.

4. The battery cell gripper of claim 3, wherein a curved gripping recess is formed in a region in which the pair of gripping fingers are in contact with the cylindrical battery cell.

5. The battery cell gripper of claim 4, wherein the gripping recess is formed in a shape corresponding to a curved surface of the side surface of the cylindrical battery cell.

6. The battery cell gripper of claim 3, further comprising a second direction transfer unit adjusting a gap between the pair of gripping fingers.

7. The battery cell gripper of claim 6, wherein the second direction transfer unit includes one of a linear motor or a ball screw motor.

8. The battery cell gripper of claim 1, wherein
the holder includes:
a pair of first gripping fingers facing each other with the cylindrical battery cell therebetween; and
a pair of second gripping fingers spaced apart from the pair of first gripping fingers in the first direction and facing each other with the cylindrical battery cell therebetween.

9. A jig device for clamping a cylindrical battery cell during welding of an electrode assembly and a current collecting plate, the jig device comprising:
a base;
a battery cell gripper provided on the base and clamping a side surface of the cylindrical battery cell; and
one or more welding masks provided on the base and contacting a bottom surface of at least one side of the cylindrical battery cell,
wherein the battery cell gripper includes:
a holder for clamping a side surface of a cylindrical battery cell; and
a first direction transfer unit configured to move the holder in a first direction so that the bottom surface of at least one side of the cylindrical battery cell is in close contact with the one or more welding masks.

10. The jig device of claim 9, wherein the first direction transfer unit of the battery cell gripper includes one of a linear motor or a ball screw motor.

11. The jig device of claim 9, wherein the holder of the battery cell gripper includes at least a pair of gripping fingers facing each other with the cylindrical battery cell therebetween.

12. The jig device of claim 11, wherein a curved gripping recess is formed in a region in which the pair of gripping fingers are in contact with the cylindrical battery cell.

13. The jig device of claim 12, wherein the gripping recess is formed in a shape corresponding to a curved surface of the side surface of the cylindrical battery cell.

14. The jig device of claim 11, wherein the battery cell gripper further includes a second direction transfer unit adjusting a gap between the pair of gripping fingers.

15. The jig device of claim 14, wherein the second direction transfer unit of the battery cell gripper includes one of a linear motor or a ball screw motor.

16. The jig device of claim 9, wherein
the holder of the battery cell gripper includes:
a pair of first gripping fingers facing each other with the cylindrical battery cell therebetween; and
a pair of second gripping fingers spaced apart from the pair of first gripping fingers in the first direction and facing each other with the cylindrical battery cell therebetween.
